(19) Europäisches Patentamt

European Patent Office

Office européen des brevets

(11) Numéro de publication: **0 192 520 B1**

(12) **FASCICULE DE BREVET EUROPEEN**

(45) Date de publication du fascicule du brevet:
21.06.89

(21) Numéro de dépôt: 86400148.2

(22) Date de dépôt: 24.01.86

(51) Int. Cl.⁴: **H02B 1/08, E05D 3/02, E05D 3/06**

(54) Dispositif pour le montage d'une porte de coffret permettant des angles d'ouverture différents, et coffret équipé d'un tel dispositif.

(30) Priorité: **29.01.85 FR 8501228**

(43) Date de publication de la demande:
**27.08.86 Bulletin 86/35**

(45) Mention de la délivrance du brevet:
**21.06.89 Bulletin 89/25**

(84) Etats contractants désignés:
**AT BE CH DE GB IT LI NL SE**

(56) Documents cités:
**FR-A- 1 316 831
FR-A- 2 265 302
FR-A- 2 266 787
FR-E- 73 897**

(73) Titulaire: **SAREL APPAREILLAGE ELECTRIQUE Société anonyme, Route de Phalsbourg, F-67260 Sarre Union(FR)**

(72) Inventeur: **Pfleger, Jean-Claude, 56, rue de la Montée, F-06730 Gungwiller(FR)**
Inventeur: **Bretnacher, Emile, 12, rue de la Gare, F-67260 Keskastel(FR)**

(74) Mandataire: **Lerner, François, 5, rue Jules Lefèbvre, F-75009 Paris(FR)**

## Description

L'invention a pour objet un dispositif pour le montage d'une porte de coffret ou d'armoire permettant un fonctionnement d'ouverture de la porte sous deux angles maxima différents. L'invention se rapporte également à des coffrets et armoires équipés d'un tel dispositif.

Pour l'alimentation, la commande ou le controle de diverses machines, notamment électriques et électroniques, on utilise couramment des coffrets ou armoires de distribution et de contrôle. Fréquemment, ces coffrets comportent une porte qui s'articule par des charnières sur le bord d'ouverture du boîtier. Le montage de la charnière conditionne l'angle d'ouverture maximal de la porte. De façon générale, lorsque l'axe de pivotement de la charnière se situe à l'intérieur du boîtier, l'ouverture maximale est limitée à 90° environ. Au contraire, si l'axe de pivotement de la charnière est déporté à l'extérieur du boîtier, l'angle d'ouverture de la porte peut dépasser 180°. Selon la disposition dans le local des coffrets, et notamment selon qu'un coffret sera placé isolé sur une surface plane de mur, ou au contraire, dans un angle d'une pièce ou à côté d'autres coffrets, on fait choix du type de coffret le plus approprié permettant une ouverture de porte sensiblement à angle droit, ou au contraire d'ouverture supérieure.

Ces circonstances sont préjudiciables pour le fabricant et pour l'utilisateur. En effet, le fabricant doit maintenir des stocks plus importants pour pouvoir faire face à des demandes d'approvisionnement dans l'un ou l'autre des types de coffrets. Pour l'utilisateur cela présente l'inconvénient que si à une époque donnée un type de coffret est bien adapté, il ne le sera peut-être plus quelque temps plus tard si l'installation est modifiée ou complétée. Dans ces conditions, l'utilisateur possède un matériel qui ne répond plus parfaitement à ses besoins et il lui faut soit en changer, soit s'accomoder de la situation.

Parmi les armoires de ce type s'ouvrant uniquement avec un angle maximal de 180° on pourra noter celle du brevet FR-A-1 316 831 dont la porte est montée articulée sur un profilé formant entretoise dont l'un des logements de pivot est, de façon classique, décalé à l'extérieur de la porte. Mais le montage de la porte sur le boîtier de l'armoire est obtenu au moyen de charnières à deux articulations qui sont reliées entre elles par ladite entretoise. Et la porte ne possède toujours qu'un seul angle maximal d'ouverture.

L'invenion a pour objet de résoudre toutes les difficultés qui viennent d'être mentionnées.

A cet effet, le dispositif pour le montage d'une porte de coffret, conforme à l'invention, qui permet un fonctionnement d'ouverture de la porte sous un angle maximal de 180° environ, du type comportant une pièce intermédiaire formant entretoise venant se verrouiller par engagement d'une goupille dans un alésage formé dans ladite entretoise et dans un logement de pivot dont la porte de coffret est équipée, ladite entretoise comportant un deuxième logement de pivot parallèle au premier logement et déporté à l'extérieur de la porte dans la position de montage de l'entretoise, ledit second logement de pivot recevant une autre goupille formant axe ou pivot d'articulation de la porte et venant s'engager dans une paumelle fixée par ailleurs au boîtier, se caractérise en ce que la fixation au boîtier de ladite paumelle s'effectue au niveau du rebord d'ouverture du boîtier, à travers des orifices prévus à cet effet, en ce que la pièce intermédiaire formant entretoise vient se monter à cheval sur le rebord de la porte et en ce que, de manière à permettre un fonctionnement d'ouverture de ladite porte sous un autre angle maximal, par exemple voisin de 90°, il est prévu une deuxième paumelle propre à être fixée au boîtier au niveau des orifices précités ménagés dans son rebord d'ouverture et à s'engager sur le logement de pivot de la porte, en lieu et place de ladite entretoise équipée de sa paumelle, ladite deuxième paumelle recevant, en correspondance avec ledit logement de pivot de la porte, l'une des goupilles précitées, celle-ci formant alors nouvel axe de rotation de la porte sur le coffret.

Il apparaît clairement que dans ces conditions, selon que l'on utilise ou non l'entretoise adaptable sur le bord de la porte et les paumelles de fixation de la porte correspondant à un montage sans entretoise ou à un montage avec entretoise, on positionne l'axe de rotation de la porte, soit à l'intérieur du boîtier, soit à l'extérieur, et l'on obtient corrélativement l'angle d'ouverture voulu de la porte, sans aucune modification ni du boîtier ni de la porte du coffret.

De cette façon, l'utilisateur peut, en utilisant ou non l'entretoise et la paumelle additionnelles, avoir un coffret dont la porte s'ouvrira sous l'angle qu'il aura choisi. L'entretoise et la paumelle additionnelles peuvent être, soit d'office livrées avec le coffret, compte-tenu du faible surcoût correspondant, soit éventuellement être livrées en option ou en supplément pour équiper l'ancien coffret précédemment acquis sans ces pièces supplémentaires.

L'invention couvre également les coffrets équipés d'un tel dispositif et permettant, à partir d'une même porte et d'un même boîtier de coffret, d'obtenir l'angle d'ouverture désiré de la porte.

L'invention et sa mise en oeuvre apparaîtront plus clairement à l'aide de la description qui va suivre faite en référence aux dessins annexés dans lesquels :

- la figure 1 montre, de façon schématique, vu de face, un coffret formé d'un boîtier équipé de sa porte pivotante,

- la figure 2 montre, en coupe avec arrachement sensiblement au niveau du plan II-II de la figure 1, le montage d'articulation de la porte sur le boîtier pour une première position de fonctionnement d'ouverture,

- la figure 3 montre, comme la figure 2, la porte montée pivotant au moyen du dispositif additionnel permettant l'ouverture de la porte sous un angle plus grand,

- les figures 4 et 5 montrent, de façon schématique, le principe de fonctionnement des articulations illustrées respectivement aux figures 2 et 3,

- la figure 6 montre, en vue éclatée en perspective, les deux dispositifs d'articulation des figures 2 et 3,

la figure 7 est une vue en coupe faite selon le plan VII-VII de la figure 6 à travers la pièce entretoise du dispositif.

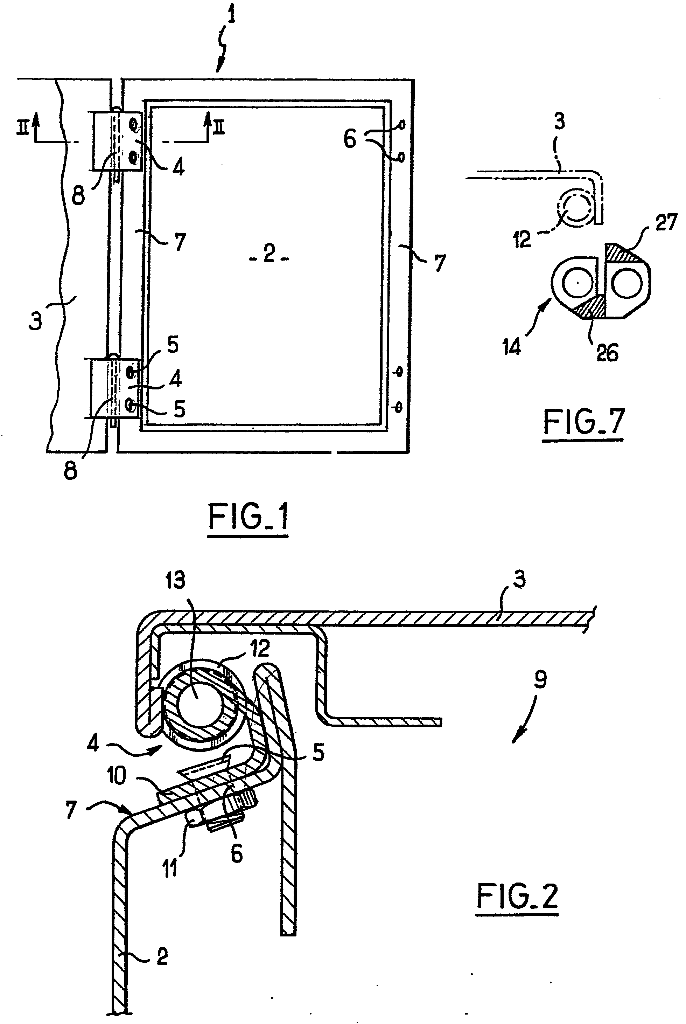

En se reportant, tout d'abord, à la figure 1, on a illustré, de façon générale, un coffret formé essentiellement d'un boîtier 2 et d'une porte 3, laquelle s'articule sur le boîtier au moyen de deux charnières représentées schématiquement 4. De façon à permettre le montage de la porte à gauche ou à droite, les charnières, telles que 4 sont normalement fixées par des vis en 5 qui traversent des orifices tels que 6, prévus tant à gauche qu'à droite sur la bordure 7 du boîtier. En 8, on a représenté schématiquement les axes ou pivots des charnières 4.

En se reportant à la figure 2, on aperçoit, de façon plus précise, le rebord 7 qui délimite l'ouverture 9 du corps du boîtier 2 obturé par la porte 3.

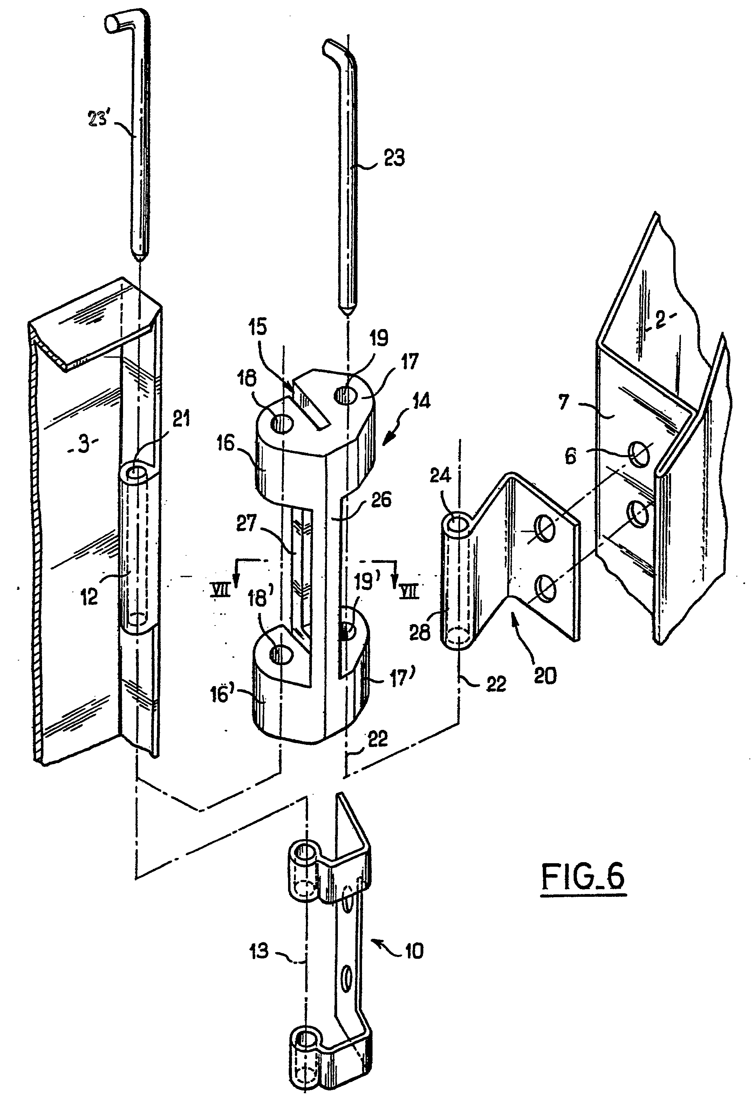

La charnière 4 comprend une paumelle 10 fixée sur le rebord 7 par des vis 5 traversant les orifices 6 et serrées au moyen d'écrous 11. La charnière 4 comprend d'autre part un logement de pivot 12, solidaire de la porte, (voir également figure 6), l'axe de rotation 13 étant matérialisé par une fiche ou une goupille 23' (voir figure 6).

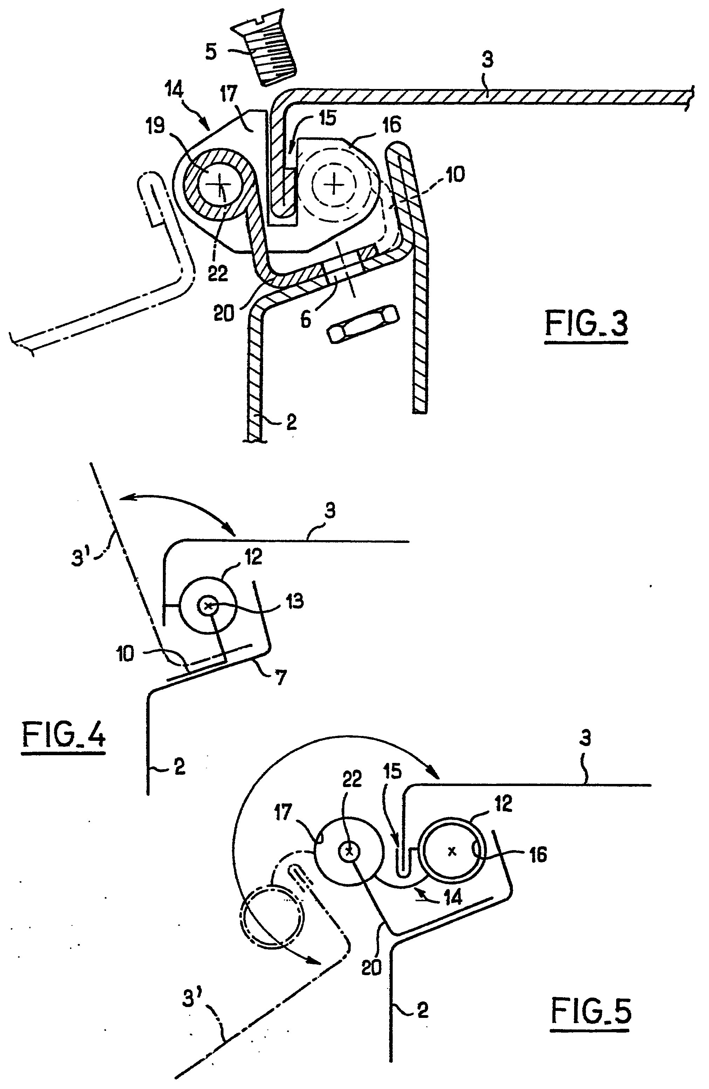

Le fonctionnement de l'articulation et l'angle d'ouverture que l'on peut obtenir de la porte (voisin de 112° dans l'exemple indiqué) résulte clairement de la comparaison des figures 2 et 4. A la figure 4 on a illustré en 3', en pointillé, la position d'ouverture maximale de la porte.

Si l'on veut obtenir un fonctionnement d'ouverture sous un angle plus grand de la porte, il suffit d'adapter le dispositif additionnel que l'on décrira ci-après en faisant référence aux figures 3, 5 et 6. Sur le rebord de la porte on vient adapter une pièce formant entretoise 14, dont la configuration apparaît plus clairement à la figure 6. L'entretoise 14 a une forme allongée parallèlement à la direction de l'axe d'articulation de la porte et présente une fente 15 parallèle à sa longueur et de largeur sensiblement égale à l'épaisseur du rebord de la porte (figure 3). De part et d'autre de la fente 15, l'entretoise 14 comporte des bossages 16, 16' ; 17, 17' dans lesquels sont formés des alésages 18, 18' ; 19, 19'. L'espacement et la configuration des bossages et des alésages permettent de positionner l'entretoise 14 à cheval sur le bord de la porte avec les bossages 16, 16' venant enserrer chaque extrémité du logement 12, précédemment décrit. Lorsqu'on introduit la goupille 23' dans les alésages 18, 18' et dans l'alésage 21 du logement 12 qui sont alignés, on verrouille ainsi l'entretoise 14 sur le rebord de la porte en l'y immobilisant.

De cette façon, il apparaît clairement (voir figure 3) que la porte 3 est solidaire des entretoises 14 et comporte, dans les bossages 17, des alésages 19 situés à l'extérieur du boîtier 2. On pourra donc, au moyen de paumelles complémentaires 20, convenablement dimensionnées, venir faire tourner la porte 3 autour de l'axe de rotation 22, en engageant simplement une goupille ou un pivot 23 dans les orifices en alignement 19, 19' de l'entretoise 14 et 24 de la paumelle 20.

Le principe de fonctionnement apparaît clairement à la figure 5, sur laquelle on peut constater que l'angle d'ouverture de la porte sera supérieur à 180°.

En se reportant aux figures 6 et 7, on aperçoit la forme particulière qui a été donnée dans l'exemple de réalisation illustré à l'entretoise 14 dont les bossages 16, 17 ; 16', 17' sont réunis par deux barrettes 26, 27, situées de part et d'autre de la fente 15, l'une vers le fond de la fente, et l'autre vers l'ouverture. Bien entendu, au niveau de la paumelle 20 son fût 28, dans lequel est formé l'alésage 24 pour le passage du pivot d'articulation 23, a une longueur qui correspond à l'espacement laissé libre entre les bossages 17, 17' de l'entretoise 14, de façon à permettre une rotation en douceur de la porte.

## Revendications

1. Dispositif pour le montage d'une porte de coffret ou armoire permettant un fonctionnement d'ouverture de la porte sous un angle maximal de 180° environ, du type comportant une pièce intermédiaire (14) formant entretoise venant se verrouiller par engagement d'une goupille dans un alésage (18, 18') formé dans ladite entretoise et dans un logement (12) de pivot dont la porte (3) de coffret est équipée, ladite entretoise comportant un deuxième logement (19, 19') de pivot parallèle au premier logement et déporté à l'extérieur de la porte dans la position de montage de l'entretoise, ledit second logement de pivot recevant une autre goupille (23) formant axe ou pivot d'articulation de la porte (3) et venant s'engager dans une paumelle (20) fixée par ailleurs au boîtier (2), ledit dispositif étant caractérisé en ce que la fixation au boîtier (2) de ladite paumelle (20) s'effectue au niveau du rebord d'ouverture (7) du boîtier, à travers des orifices (6) prévus à cet effet, en ce que la pièce intermédiaire (14) formant entretoise vient se monter à cheval sur le rebord de la porte (3) et en ce que, de manière à permettre un fonctionnement d'ouverture de ladite porte sous un autre angle maximal, par exemple voisin de 90°, il est prévu une deuxième paumelle (10) propre à être fixée au boîtier au niveau des orifices (6) précités ménagés dans son rebord (7) d'ouverture et à s'engager sur le logement (12) de pivot de la porte (3), en lieu et place de ladite entretoise (14) équipée de sa paumelle (20), ladite deuxième paumelle (10) recevant, en correspondance avec ledit logement (12) de pivot de la porte, l'une des goupilles précitées, celle-ci formant alors nouvel axe de rotation de la porte sur le coffret.

2. Dispositif selon la revendication 1, caractérisé en ce que ladite entretoise (14) a une forme allongée présentant une fente (15) parallèle à sa longueur et de largeur sensiblement égale à l'épaisseur du rebord de la porte.

3. Dispositif selon la revendication 2, caractérisé en ce que ladite entretoise (14) présente, de part et d'autre de ladite fente (15), des bossages (16, 16'; 17, 17') précités pour recevoir la goupille de verrouillage à la porte et le pivot de rotation (23) de la porte.

4. Dispositif selon la revendication 3, caractérisé en ce que lesdits bossages (16, 16'; 17, 17') viennent enserrer respectivement ledit premier logement (12) de pivot de la porte et le fût (28) de ladite paumelle (20).

5. Dispositif selon la revendication 4, caractérisé en ce que lesdits bossages sont reliés longitudinalement par deux barrettes situées de part et d'autre de la fente (15), l'une (26) vers le fond de la fente et l'autre (27) vers l'ouverture.

6. Armoire ou coffret équipé d'un dispositif selon l'une des revendications précédentes, caractérisé en ce que l'on utilise ou non ladite entretoise (14) et les paumelles (20) correspondantes, selon que l'on désire que la porte s'ouvre sous un angle déterminé ou sous un autre.

## Patentansprüche

1. Einrichtung zur Halterung einer Gehäuse- oder Schranktür, wobei die Einrichtung eine Öffnungsfunktion der Tür unter einem maximalen Winkel von ca. 180° ermöglicht, mit einem einen Steg bildenden Zwischenstück (14), der durch Eingriff eines Stiftes in eine in dem Steg gebildete Bohrung (18, 18') und in ein an der Gehäusetür vorgesehenes Zapfenlager (12) verriegelbar ist und der ein zweites, zu dem ersten Lager paralleles und zur Türaußenseite in eine Montageposition des Stegs versetztes Zapfenlager (19, 19') umfaßt, wobei das zweite Zapfenlager einen weiteren Stift (23) aufnimmt, der eine Schwenkachse oder einen Schwenkzapfen der Tür (3) bildet und in ein im übrigen an dem Gehäuse (2) befestigtes Türband (20) eingreift, wobei die Einrichtung dadurch gekennzeichnet ist, daß die Befestigung des Türbandes (20) an dem Gehäuse (2) an einer Fläche der Öffnungskante (7) des Gehäuses durch zu diesem Zweck vorgesehene Öffnungen (6) hindurch erfolgt, daß das den Steg bildende Zwischenstück (14) auf der Kante der Tür (3) aufsitzt und daß, um eine Öffnungsfunktion der Tür unter einem anderen maximalen Winkel von zum Beispiel annähernd 90° zu ermöglichen, ein zweites Türband (10) vorgesehen ist, das so ausgebildet ist, daß es mit dem Gehäuse an der Fläche der genannten, in seiner Öffnungskante (7) angeordneten Öffnungen (6) verbunden werden und, bei an Ort und Stelle befindlichem, mit seinem Türband (20) versehenem Steg (14), an dem Zapfenlager (12) der Tür (3) angreifen kann, wobei das zweite Türband (10) entsprechend dem Zapfenlager (12) der Tür einen der vorerwähnten Stifte aufnimmt, der dann eine neue Bewegungsachse der Tür an dem Gehäuse bildet.

2. Einrichtung nach Anspruch 1, dadurch gekennzeichnet, daß der Steg (14) eine langgestreckte Gestalt hat, die einen zu ihrer Längserstreckung parallelen Schlitz (15) aufweist, der eine Breite ungefähr gleich der Kantenstärke der Tür hat.

3. Einrichung nach Anspruch 2, dadurch gekennzeichnet, daß der Steg (14) beiderseits des Schlitzes (15) Vorsprünge oder Buckel (16, 16'; 17, 17') aufweist, in denen die vorerwähnten Bohrungen (18, 18'; 19, 19') gebildet sind, um den Verriegelungsstift (23') an der Tür und den Drehzapfen (23) der Tür aufzunehmen.

4. Einrichtung nach Anspruch 3, dadurch gekennzeichnet, daß die Vorsprünge oder Buckel (16, 16'; 17, 17') jeweils das erste Zapfenlager (12) der Tür und das Lager (28) des Türbandes (20) zwischen sich aufnehmen.

5. Einrichtung nach Anspruch 4, dadurch gekennzeichnet, daß die Vorsprünge oder Buckel mittels zweier, beiderseits des Schlitzes (15) angeordneter Verbindungsstege, von denen sich der eine (26) zur Rückseite des Schlitzes und der andere (27) zur Öffnung hin befindet, längsverbunden sind.

6. Schrank oder Gehäuse, ausgestattet mit einer Einrichtung nach einem der vorangehenden Ansprüche, dadurch gekennzeichnet, daß der Steg (14) und die entsprechenden Türbänder (20) abhängig davon, ob sich die Tür unter einem vorgegebenen oder unter einem anderen Winkel öffnen soll, verwendet oder nicht verwendet werden.

## Claims

1. A device for the mounting of a cabinet or cupboard door permitting the door to open to a maximum angle of approximately 180°, of the type comprising an intermediate member (14) forming a spacer member which becomes locked by the engagement of a pin in a bore (18, 18') formed in the said spacer and in a pivot housing (19, 19') provided on the cabinet door (3), the said spacer comprising a second pivot housing (19, 19') parallel with the first housing and offset towards the outside of the door in the spacer assembly position, the said second pivot housing receiving another pin (23) forming a spindle or pivot housing receiving another pin (23) forming a spindle or pivot about which the door (3) is articulated and adapted to engage into a hinge plate (20) which is also fixed to the casing (2), the said device being characterised in that attachment of the said hinge plate (20) to the casing (2) occurs at the level of the returned opening edge (7) of the casing, through orifices (6) provided for the purpose, in that the intermediate member (14) which forms a spacer is mounted to straddle the rebate of the door (3) and in that, in such a way as to allow the door to open to another maximum angle, for example close to 90°, a second hinge plate (10) is provided which is adapted to be fixed to the casing at the level of the orifices (6) disposed in the opening return (7) and to engage the pivot housing (12) of the door (3), in place of the said spacer (14) equipped with its hinge plate (20), the said second hinge plate (10) comprising, in such a way as to correspond to the said pivot housing (12) of the door, one of the aforesaid pins, this latter then forming a new axis of rotation for the cabinet door.

2. A device according to Claim 1, characterised in that the said spacer (14) is of elongate form, comprising a slot (15) parallel with its length and of a width which is substantially equal to the thickness of the door rebate.

3. A device according to Claim 2, characterised in that the said spacer (14) has on either side of the said slot (15), bosses (16, 16'; 17, 17') in which are formed the aforesaid bores (18, 18'; 19, 19') to receive the locking pin (23') for attachment to the door and the pivot (23) about which the door rotates.

4. A device according to Claim 3, characterised in that the said bosses (16, 16'; 17, 17') respectively grip the said first door pivot housing (12) and the barrel portion (28) of the said hinge plate (20).

5. A device according to Claim 4, characterised in that the said bosses are connected longitudinally by two small bars situated on either side of the slot (15), one (26) towards the bottom of the slot and the other (27) towards the opening.

6. A cabinet or case equipped with a device according to one of the preceding Claims, characterised in that the said spacer (14) and the corresponding hinge plates (20) are or are not used according to whether it is desired that the door open to one specific angle or to another.

FIG_1

FIG_7

FIG_2

EP 0 192 520 B1

FIG.3

FIG.4

FIG.5

FIG.6